# EUROPEAN PATENT APPLICATION

(11) **EP 3 908 004 A1**
(43) Date of publication of application: **10.11.2021**
(21) Application number: 19907819.7
(22) Date of filing: 02.01.2019
(51) Int. Cl.: H04N 19/597, H04N 19/51

(54) **CANDIDATE MV LIST CONSTRUCTION METHOD AND DEVICE**

(71) Applicant: SZ DJI Technology Co., Ltd., Shenzhen, Guangdong 518057 (CN)
(72) Inventor: MENG, Xuewei, Beijing 100871 (CN); ZHENG, Xiaozhen, Shenzhen, Guangdong 518057 (CN); WANG, Shanshe, Beijing 100871 (CN); MA, Siwei, Beijing 100871 (CN)
(74) Representative: Appelt, Christian W.
(86) International application number: PCT/CN2019/070157
(87) International publication number: WO 2020/140221

(57) **Abstract**

A candidate MV list construction method and device. The method includes: obtaining a first candidate MV list of a current image block in a first merge mode when an inter-frame prediction mode is the first merge mode; and when the inter-frame prediction mode is a second merge mode, obtaining the first candidate MV list of the current image block; and reorganize MVs in the first candidate MV list to obtain a second candidate MV list of the current image block in the second merge mode when the first candidate MV list includes two-way MVs. Complexity of hardware of a video encoding/decoding device is reduced.

## Description

### TECHNICAL FIELD

The present disclosure relates to the field of computer technologies and, more particularly, to a candidate motion vector list construction method and device.

### BACKGROUND

Various video encoding standards including a high-efficiency video encoding (HEVC) standard have proposed predictive encoding modes for image blocks. The predictive encoding modes predict a current block to be encoded based on encoded video data blocks. In an intraframe prediction mode, the current block is predicted based on one or more previously decoded adjacent blocks in the same image as the current block. In an inter-frame prediction mode, the current block is predicted based on the decoded blocks in different images.

For versatile video encoding (VVC) technology, if the inter-frame prediction mode used for encoding the current image block is a merge mode (a skip mode is regarded as a special case of the merge mode) and the used prediction method is triangle merge mode, the triangle merge mode constructs a candidate motion vector (MV) list according to construction rules different from other prediction methods in the merge mode, such that the hardware implementation of the video codec device has a higher degree of complexity.

### SUMMARY

The present disclosure provides a candidate MV list construction method and device, to reduce complexity of hardware of a video encoding/decoding device.

In a first aspect, embodiments of the disclosure provide a candidate MV list construction method. The method includes: obtaining a first candidate MV list of a current image block in a first merge mode when an inter-frame prediction mode is the first merge mode; and

when the inter-frame prediction mode is a second merge mode, obtaining the first candidate MV list of the current image block; and reorganizing MVs in the first candidate MV list to obtain a second candidate MV list of the current image block in the second merge mode when the first candidate MV list includes two-way MVs.

In one implementation, obtaining the first candidate MV list of the current image block in the first merge mode includes:

constructing the first candidate MV list according to at least one candidate MV of the current image block where the at least one candidate MV is obtained by a candidate MV acquisition method corresponding to the first merge mode.

In one implementation, a number of MVs in the second candidate MV list is less than a preset threshold, and the method further includes:

obtaining at least one other candidate MV of the current image block by using at least one other candidate MV obtaining method; and

updating the second candidate MV list according to the at least one other candidate MV, to obtain an updated second candidate MV list, where the number of MVs included in the updated second candidate MV list is less than or equal to the preset threshold, and the updated second candidate MV list is used for encoding or decoding of the current image block.

In one implementation, the second candidate MV list includes M preset filling vectors, and a sum of the number of the MVs included in the second candidate MV list and M equals the preset threshold.

Updating the second candidate MV list according to the at least one other candidate MV to obtain the updated second candidate MV list includes:

determining at least one single-way MV according to the at least one other candidate MV; and

replacing N preset filling vectors in the second candidate MV list of the current image block with N single-way MVs of the at least one single-way MV to obtain the updated second candidate MV list, where N≤M.

In one implementation, the second candidate MV list does not include M preset filling vectors, and a sum of the number of the MVs included in the second candidate MV list and M equals a preset threshold.

In one implementation, updating the second candidate MV list according to the at least one other candidate MV to obtain the updated second candidate MV list includes:

confirming that the number of MVs in the second candidate MV list after adding all the at least one single-way to the second candidate MV list of the current image block is less than the preset threshold; and

adding at least one preset filling vector to the second candidate MV list of the current image block to obtain the updated second candidate MV list, where a sum of the number of the MVs and a number of preset filling vectors in the updated second candidate MV list equals the preset threshold.

In one implementation, obtaining the at least one other candidate MV of the current image block by using the at least one other candidate MV acquisition method includes obtaining at least one first candidate MV of the current image block by using a first candidate MV acquisition method. Updating the second candidate MV list according to the at least one other candidate MV, to obtain the updated second candidate MV list includes updating the second candidate MV list according to the at least one first candidate MV, to obtain the updated second candidate MV list.

In one implementation, obtaining the at least one other candidate MV of the current image block by using the at least one other candidate MV acquisition method includes: obtaining at least one first candidate MV of the current image block by using a first candidate MV acquisition method and at least one second candidate MV of the current image block by using a second candidate MV acquisition method; and updating the second candidate MV list according to the at least one other candidate MV, to obtain the updated second candidate MV list includes: updating the second candidate MV list according to the at least one first candidate MV, to obtain the second candidate MV list after the first update; confirming that the number of MVs in the second candidate MV list after the first update is less than the preset threshold; and updating the second candidate MV list after the first update according to the at least one second candidate MV, to obtain the updated second candidate MV list. In one implementation, obtaining the at least one other candidate MV of the current image block by using the at least one other candidate MV acquisition method includes: obtaining at least one first candidate MV of the current image block by using a first candidate MV acquisition method, at least one second candidate MV of the current image block by using a second candidate MV acquisition method, and at least one third candidate MV of the current image block by using a third candidate MV acquisition method; and updating the second candidate MV list according to the at least one other candidate MV, to obtain the updated second candidate MV list includes: updating the second candidate MV list according to the at least one first candidate MV, to obtain the second candidate MV list after first update; confirming that the number of MVs in the second candidate MV list after the first update is less than the preset threshold; updating the second candidate MV list after the first update according to the at least one second candidate MV, to obtain the second candidate MV list after second update; confirming that the number of MVs in the second candidate MV list after the second update is less than the preset threshold; and updating the second candidate MV list after the second update according to the at least one third candidate MV, to obtain the updated second candidate MV list.

In one implementation, the at least one other candidate MV acquisition method includes at least one of a candidate MV acquisition method based on the HMVP technology, a candidate MV acquisition method based on the MMVD technique, or a candidate MV acquisition method based on the paired average technique.

In one implementation, the first candidate MV acquisition method is the candidate MV acquisition method based on the HMVP technology.

In one implementation, the second candidate MV acquisition method is the candidate MV acquisition method based on the MMVD technique.

In one implementation, the third candidate MV acquisition method is the candidate MV acquisition method based on the paired average technique.

In one implementation, the preset threshold is any value from 4 to 12.

In one implementation, each of the preset filling vectors is a vector whose components are all 0.

In one implementation, constructing the first candidate MV list according to the at least one candidate MV of the current image block includes: adding the at least one candidate MV of the current image block to the first candidate MV list according to an adding order of the at least one candidate MV of the current image block.

In one implementation, reorganizing the MVs in the first candidate MV list to obtain the second candidate MV list of the current image block in the second merge mode includes: for each single-way MV of the first candidate MV list, adding the single-way MV to the candidate MV list according to the order of the single-way MV in the first candidate MV list, and determining that the number of the MVs in the candidate MV list is less than the preset threshold; for each two-way MV group of the first candidate MV list, adding the forward MV of the two-way MV group to the second candidate MV list, and determining that the number of the MVs in the second candidate MV list is less than the preset threshold; when it is determined that the number of the MVs in the second candidate MV list is less than the preset threshold after the forward MV in each two-way MV group is added to the second candidate MV list, for each two-way MV group of the first candidate MV list, adding the backward MV of the two-way MV group to the second candidate MV list according to the order of the two-way MV group in the first candidate MV list and determining that the number of the MVs in the second candidate MV list is less than the preset threshold; when it is determined that the number of the MVs in the second candidate MV list is less than the preset threshold after the backward MV in each two-way MV group is added to the second candidate MV list, for each two-way MV group of the first candidate MV list, adding an average value of the forward MV and the backward MV of the two-way MV group to the second candidate MV list according to the order of the two-way MV group in the first candidate MV list; when the number of the MVs in the second candidate MV list is less than the preset threshold and the first candidate MV list includes two-way MV groups after the current two-way group, adding an average value of the forward MV and the backward MV of the first two-way MV group after the current two-way MV group in the first candidate MV list to the second candidate MV list; when the number of the MVs in the second candidate MV list equals the preset threshold, or when the number of the MVs in the second candidate MV list is less than the preset threshold and the first candidate MV list does not include other two-way MV group after the current two-way group, determining the obtained second candidate MV list after the average value of the forward MV and the backward MV of the two-way MV group is added to the second candidate MV list as the second candidate MV list of the current image block.

In a second aspect, embodiments of the disclosure provide a candidate MV list construction device. The device includes an acquisition module, configured to obtain a first candidate MV list of a current image block in a first merge mode when the inter-frame prediction mode is the first merge mode; and a reorganization module, configured to obtain the first candidate MV list of the current image block when the inter-frame prediction mode is a second merge mode; and reorganize the MVs in the first candidate MV list to obtain a second candidate MV list of the current image block in the second merge mode when the first candidate MV list includes two-way MV.

In one implementation, the acquisition module is specifically configured to construct the first candidate MV list according to at least one candidate MV of the current image block where the at least one candidate MV may be obtained by a candidate MV acquisition method corresponding to the first merge mode.

In one implementation, the acquisition module is further configured to obtain at least one other candidate MV of the current image block by using at least one other candidate MV obtaining method; and the device further comprises an update module, configured to update the second candidate MV list according to the at least one other candidate MV, to obtain an updated second candidate MV list, where the number of MVs included in the updated second candidate MV list is less than or equal to the preset threshold, and the updated second candidate MV list is used for encoding or decoding of the current image block.

In one implementation, the second candidate MV list includes M preset filling vectors, and a sum of the number of the MVs included in the second candidate MV list and M equals a preset threshold; and the update module is specifically configured to: determine at least one single-way MV according to the at least one other candidate MV; and replace N preset filling vectors in the second candidate MV list of the current image block with N single-way MVs of the at least one single-way MV to obtain the updated second candidate MV list, where N≤M.

In one implementation, the second candidate MV list does not include M preset filling vectors, and a sum of the number of the MVs included in the second candidate MV list and M equals a preset threshold.

In one implementation, the update module is specifically configured to: determine at least one single-way MV according to the at least one other candidate MV; confirm that the number of MVs in the second candidate MV list is less than the preset threshold after adding all the at least one single-way to the second candidate MV list of the current image block; and add at least one preset filling vector to the second candidate MV list of the current image block to obtain the updated second candidate MV list, where a sum of the number of included MVs and the number of preset filling vectors in the updated second candidate MV list equals the preset threshold.

In one implementation, the acquisition module is specifically configured to obtain at least one first candidate MV of the current image block by using the first candidate MV acquisition method; and the update module is specifically configured to update the second candidate MV list according to the at least one first candidate MV, to obtain the updated second candidate MV list.

In one implementation, the acquisition module is specifically configured to obtain at least one first candidate MV of the current image block by using the first candidate MV acquisition method and at least one second candidate MV of the current image block by using the second candidate MV acquisition method; and the update module is specifically configured to: update the second candidate MV list according to the at least one first candidate MV, to obtain the second candidate MV list after the first update; confirm that the number of MVs in the second candidate MV list after the first update is less than the preset threshold; and update the second candidate MV list after the first update according to the at least one second candidate MV, to obtain the updated second candidate MV list.

In one implementation, the acquisition module is specifically configured to obtain at least one first candidate MV of the current image block by using the first candidate MV acquisition method, at least one second candidate MV of the current image block by using the second candidate MV acquisition method, and at least one third candidate MV of the current image block by using the third candidate MV acquisition method; and the update module is specifically configured to: update the second candidate MV list according to the at least one first candidate MV, to obtain the second candidate MV list after the first update; confirm that the number of MVs in the second candidate MV list after the first update is less than the preset threshold; update the second candidate MV list after the first update according to the at least one second candidate MV, to obtain the second candidate MV list after the second update; confirm that the number of MVs in the second candidate MV list after the second update is less than the preset threshold; and update the second candidate MV list after the second update according to the at least one third candidate MV, to obtain the updated second candidate MV list.

In one implementation, the at least one other candidate MV acquisition method includes at least one of a candidate MV acquisition method based on the HMVP technology, a candidate MV acquisition method based on the MMVD technique, or a candidate MV acquisition method based on the paired average technique.

In one implementation, the first candidate MV acquisition method is the candidate MV acquisition method based on the HMVP technology.

In one implementation, the second candidate MV acquisition method is the candidate MV acquisition method based on the MMVD technique.

In one implementation, the third candidate MV acquisition method is the candidate MV acquisition method based on the paired average technique.

In one implementation, the preset threshold is any value from 4 to 12.

In one implementation, each of the preset filling vectors is a vector whose components are all 0.

In one implementation, the acquisition module is specifically configured to: add the at least one candidate MV of the current image block to the first candidate MV list according to an adding order of the at least one candidate MV of the current image block dictated by the preset rule.

In one implementation, the reorganization module is configured to: for each single-way MV of the first candidate MV list, add the single-way MV to the candidate MV list according to the order of the single-way MV in the first candidate MV list, and determine that the number of the MVs in the candidate MV list is less than the preset threshold; for each two-way MV group of the first candidate MV list, add the forward MV of the two-way MV group to the second candidate MV list, and determine that the number of the MVs in the second candidate MV list is less than the preset threshold; after the forward MV in each two-way MV group is added to the second candidate MV list, and it is determined that the number of the MVs in the second candidate MV list is less than the preset threshold, for each two-way MV group of the first candidate MV list, add the backward MV of the two-way MV group to the second candidate MV list according to the order of the two-way MV group in the first candidate MV list and determine that the number of the MVs in the second candidate MV list is less than the preset threshold; after the backward MV in each two-way MV group is added to the second candidate MV list and it is determined that the number of the MVs in the second candidate MV list is less than the preset threshold, for each two-way MV group of the first candidate MV list, add an average value of the forward MV and the backward MV of the two-way MV group to the second candidate MV list according to the order of the two-way MV group in the first candidate MV list; when the number of the MVs in the second candidate MV list is less than the preset threshold and the first candidate MV list includes two-way MV groups after the current two-way group, add an average value of the forward MV and the backward MV of the first two-way MV group after the current two-way MV group in the first candidate MV list to the second candidate MV list; when the number of the MVs in the second candidate MV list equals the preset threshold, or when the number of the MVs in the second candidate MV list is less than the preset threshold and the first candidate MV list does not include other two-way MV group after the current two-way group, determine the obtained second candidate MV list after the average value of the forward MV and the backward MV of the two-way MV group is added to the second candidate MV list as the second candidate MV list of the current image block.

n a third aspect, embodiments of the disclosure provide a readable storage medium, storing programs or instructions, where when the programs or instructions are executed on a computer, any of the methods in the first aspect is executed.

n a fourth aspect, embodiments of the disclosure provide an electronic device. The device includes a processor and a memory. The processor is coupled with the memory; the memory is configured to store a computer program; and the processor is configured to call the computer program in the memory, to implement any of the methods in the first aspect.

In the present disclosure, when the inter-frame prediction mode is the second merge mode, the first candidate MV list in the first merge mode may be multiplexed, that is, there may be no need to reconstruct a first candidate MV list in the second merge mode. The complexity of the hardware of the video codec device may be reduced, such that the hardware of the video codec device may be easier to implement.

### BRIEF DESCRIPTION OF THE DRAWINGS

In order to more clearly describe the technical solutions in the embodiments of the present disclosure or the existing technologies, the drawings used in the description of the embodiments or the existing technologies will be briefly described. Obviously, the drawings in the following description are some embodiments of the present disclosure. For those of ordinary skill in the art, other drawings can be obtained based on these drawings without creative work.
FIG. 1 is block diagram of an image processing system consistent with an embodiment of the present disclosure.
FIG. 2 is a flow chart of a candidate MV list construction method consistent with an embodiment of the present disclosure.
FIG. 3 is a schematic diagram of candidate blocks of an image block consistent with an embodiment of the present disclosure.
FIG. 4A is a schematic diagram showing image block division corresponding to a triangle merge mode consistent with an embodiment of the present disclosure.
FIG. 4B is another schematic diagram showing image block division corresponding to a triangle merge mode consistent with an embodiment of the present disclosure.
FIG. 5 is another flow chart of a candidate MV list construction method consistent with an embodiment of the present disclosure.
FIG. 6 is another flow chart of a candidate MV list construction method consistent with an embodiment of the present disclosure.
FIG. 7 is another flow chart of a candidate MV list construction method consistent with an embodiment of the present disclosure.
FIG. 8 is another flow chart of a candidate MV list construction method consistent with an embodiment of the present disclosure.
FIG. 9 is a schematic structural diagram of a candidate MV list construction device consistent with an embodiment of the present disclosure.
FIG. 10 is another schematic structural diagram of a candidate MV list construction device consistent with an embodiment of the present disclosure.
FIG. 11 is a schematic structural diagram of an electronic system consistent with an embodiment of the present disclosure.

### DETAILED DESCRIPTION OF THE EMBODIMENTS

In order to make the purpose, technical solutions, and advantages of the embodiments of the disclosure clearer, the technical solutions in the embodiments of the disclosure will be described clearly and completely in conjunction with the drawings in the embodiments of the disclosure. Obviously, the described embodiments are some but not all of the embodiments of the disclosure. Based on the embodiments in the disclosure, all other embodiments obtained by a person of ordinary skill in the art without creative work shall fall within the scope of the disclosure.

The technical terms used in the present disclosure are described below.

Encoded video stream, or part thereof, such as video frames or image blocks, can use the temporal and spatial similarity in the video stream to improve encoding performance. For example, the current image block of the video stream can predict the motion information of the current image block based on the previously encoded block in the video stream, and calculate the difference (also known as the residual) between the predicted block and the current image block (the original block), such that the current image block is encoded based on the previously encoded blocks. In this way, only the residual and some parameters used to generate the current image block are included in the digital video output bitstream, instead of including the entire current image block in the digital video output bitstream. This technique can be called inter-frame prediction.

An MV is an important parameter in the inter-frame prediction process, which represents the spatial displacement of a previously encoded block relative to the currently encoding block. Motion estimation methods, such as motion search, can be used to obtain motion vectors. In some cases, the prediction motion vector can be selected from the motion vector previously used in the video stream. Choosing the previously used motion vector to encode the current motion vector can further reduce the number of bits included in the encoded video bitstream.

In the VVC standard, there are two inter-frame prediction modes for image blocks including a merge mode (a skip mode is regarded as a special case of the merge mode) and an advanced motion vector prediction (AMVP) mode.

Forward MV: If the best matching block of an image block A is an image block B, and the frame where image block B is located is a historical frame of the frame where image block A is located, the MV of the image block B relative to the image block A is the MV of the image block A, that is, it is the forward MV of the image block A.

Backward MV: If the best matching block of an image block A is an image block B, and the frame where image block B is located is a future frame of the frame where the image block A is located, the MV of the image block B relative to the image block A is the MV of the image block A, that is, it is the backward MV of the image block A.

Two-way MV group: If a first best matching block of an image block A is an image block B₁, the frame where image block B₁ is located is a historical frame of the frame where the image block A is located, a second best matching block of the image block A is an image block B₂, and the frame where image block B₂ is located is a future frame of the frame where the image block A is located, that is, if MV₁ of the image block B₁ relative to the image block A is obtained and the MV₂ of the image block B₂ relative to the image block A is obtained, MV₁ and MV₂ form the two-way MV group. MV₁ is the forward MV of the image block and MV₂ is the backward MV of the image block A.

Single-way MV: an MV that does not appear as the two-way MV group is a single-way MV, for example:
(1) If MV₁ of the image block B₁ in the historical frame of the frame where the image block A is located relative to the image block A is obtained and MV₂ of the image block B₂ in the future frame of the frame where the image block A is located relative to the image block A is not obtained, MV₁ is a single-way MV and the image block B₁ is the best matching block of the image block A;
(2) If MV₂ of the image block B₂ in the future frame of the frame where the image block A is located relative to the image block A is obtained and MV₁ of the image block B₁ in the historical frame of the frame where the image block A is located relative to the image block A is not obtained, MV₂ is a single-way MV and the image block B₂ is the best matching block of the image block A.

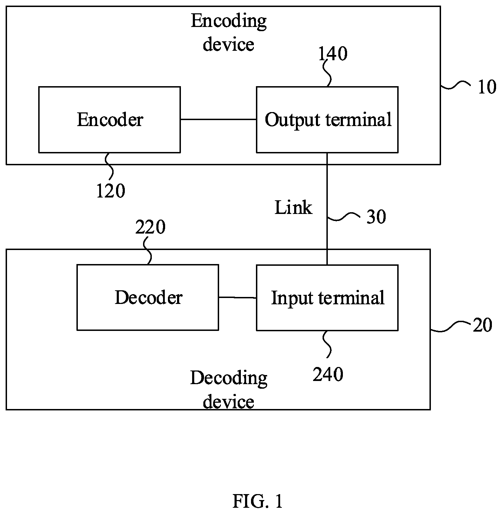

One embodiment of the present disclosure provides an image processing system, as shown in FIG. 1. In the present disclosure, the term "image processing system" generally refers to both image encoders and image decoders. In the present disclosure, the term "image processing" can generally refer to image encoding or image decoding.

As shown in FIG. 1, the image processing system includes an encoding device 10 and a decoding device 20. The encoding device 10 is used to perform an encoding process on a multi-frame image to obtain an encoded bitstream. The decoding device 20 is used to perform a decoding process on the bitstream after the multi-frame image is encoded, and restore the multi-frame image before the encoding.

Specifically, the encoding device 10 uses an encoder 120 to encode the multi-frame image to obtain the encoded bitstream, which is then output to the decoding device 20 via an output interface 140. The decoding device 20 receives the encoded bitstream of the multi-frame image through an input interface 240, and uses a decoder 220 to decode the coded stream of the multi-frame image to restore the multi-frame image before encoding.

Further, the encoding device 10 outputs the encoded bitstream through the output interface 140 and then transmit it to the decoding device 20 via a link 30. The link 30 may include one or more media or devices capable of moving the encoded bitstream of the multi-frame image from the encoding device 10 to the decoding device 20. The one or more communication media may include wireless and/or wired communication media, such as a radio frequency (RF) spectrum or one or more physical transmission lines. The one or more communication media may form part of a packet-based network, such as a local area network, a wide area network, or a global network (e.g., the Internet). The one or more communication media may include routers, switches, base stations, or other devices that facilitate communication from the encoding device 10 to the decoding device 20.

The encoder 120 and the decoder 220 may operate according to a video compression standard such as VVC or its extensions, and may conform to the VVC test model (HM). Alternatively, the encoder 120 and the decoder 220 may also operate according to other industry standards, such as the ITU-T H.264, H.265 standard, or an extension of such standards.

The encoding device 10 may include one of a terminal device or a server. The decoding device 20 may include one of a terminal device or a server.

An inter-frame prediction process will be described below with reference to FIG. 1.

In the inter-frame prediction, the encoding device uses the reconstructed frame which is previously encoded as the reference frame, and predicts the current frame (the frame currently being encoded) through motion estimation and motion compensation, thereby removing the temporal redundant information of the video. A frame of image is first divided into large coding areas (Coding Tree Unit, CTU), such as 64x64, 128x128. Each CTU is further divided into square or rectangular coding units (CUs). Each CU searches for the most similar block in the reference frame (usually a reconstructed frame adjacent in the temporal) as the predicted block of the current CU based on the predicted MV of the current CU. The relative displacement between the current block and the similar block is the motion vector (MV). The process of motion estimation is the process of searching and comparing the current coding block of the current frame in the reference frame to obtain the MV. Motion compensation is the process of using MV and reference frames to obtain a predicted frame. The predicted frame obtained by this process may be different from the original current frame. Therefore, the difference between the predicted frame and the current frame needs to be transmitted to the decoding device after processes including transformation, quantization, etc. Further, the MV information also needs to be transmitted to the decoding device. In this way, the decoder end performs inverse quantization and inverse transformation to obtain the difference between the predicted frame and the current frame, and then the current frame can be reconstructed according to the difference between the MV, the reference frame, the predicted frame, and the current frame.

The present disclosure also provides a method to construct a candidate MV list and the various embodiments will be described below.

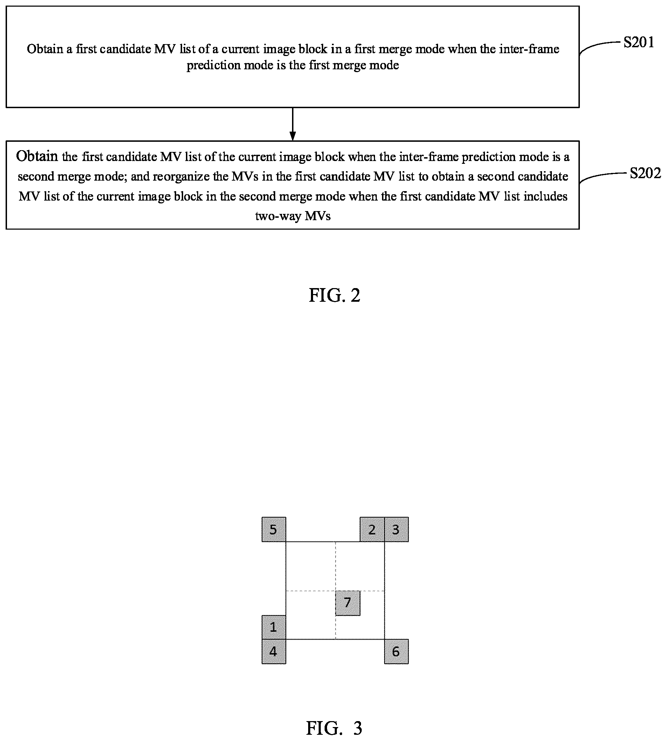

One embodiment of the present disclosure provides a method to construct the candidate MV list, as shown in FIG. 2. The execution subject of the method in the present embodiment can be encoder in FIG. 1. As shown in FIG. 2, the method includes S201 to S202.

In S201, when the inter-frame prediction mode is a first merge mode, a first candidate MV list of a current image block in the first merge mode is constructed.

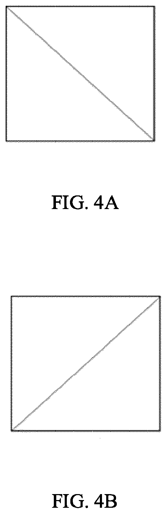

The construction of the first candidate MV list of the current image block in the first merge mode will be described below. MVs in the first candidate MV list may all be candidate MVs of the current image block.
(1) Spatial MVs of K spatial candidate blocks of the current image block may be acquired according to a preset spatial MV acquisition order.
   The spatial MVs of K spatial candidate blocks maybe acquired using a method in the existing technologies.
   Specifically, the preset spatial MV acquisition order may be: a first image block adjacent to a first corner of the current image block and located at a first side of the current image block, a second image block adjacent to a second corner of the current image block and located above of the current image block, a third image block adjacent to the second corner of the current image block and located above the current image block, and a fourth image block adjacent to the first corner of the current image block and located at the first side of the current image block, and a fifth image block adjacent to a third corner of the current image block and located at the first side of the current image block. The first corner and the second corner are opposite corners. That is, the order of acquiring the spatial MV of each spatial candidate block may be the first image block, the second image block, the third image block, the fourth image block, and the fifth image block.
   FIG. 3 is a schematic diagram of the candidate blocks of the current image block in the present embodiment.
   As shown in FIG. 3, image blocks 1, 2, 3, 4, and 5 are five spatial candidate blocks of the current image block 41, and image blocks 6 and 7 are two temporal candidate blocks of the current image block 41. The first image block can be the image block labeled as 1 in FIG. 3, the second image block can be the image block labeled as 2 in FIG. 4, the third image block can be the image block labeled as 3 in FIG. 4, and the fourth image block can be the image block labeled as 4 in FIG. 4, and the fifth image block can be the image block labeled as 5 in FIG. 4.
   The spatial MVs of K spatial candidate blocks maybe acquired using a method in the existing technologies, description of which is omitted in this embodiment.
(2) Spatial MVs of F temporal candidate blocks of the current image block may be acquired according to a preset temporal MV acquisition order.
   The preset temporal MV acquisition order may be: a sixth image block adjacent to a fourth corner of the current image block and located at a second side of the current image block, and a co-located image block in an adjacent encoded image of the current image block. The fourth corner and the third corner are opposite comers. That is, the order of acquiring the temporal MV of each temporal candidate block is the sixth image block, the co-located image block in the adjacent encoded image of the current image block.
   As shown in FIG. 3, image blocks 6 and 7 are two spatial candidate blocks of the current image block 41. The sixth image block can be the image block labeled as 6 in FIG. 3, and the co-located image block in the adjacent encoded image of the current image block can be the image block labeled as 7 in FIG. 3.
(3) Each spatial MV is added to the first candidate MV list according to the preset spatial MV acquisition order and each temporal MV is added to the first candidate MV list according to the preset temporal MV acquisition order, to obtain the first candidate MV list of the current image block whose number of included MVs is a first preset threshold or the first candidate MV list whose sum of the number of included MVs and the number of preset filling vectors is the first preset threshold.

A preset filling vector may be a vector whose component is 0.

For the method of obtaining the first candidate MV list, please refer to the method of obtaining the candidate MV list of the current image block in the normal merge mode in the current VCC standard.

In S202, when the inter-frame prediction mode is a second merge mode, the first candidate MV list of the current image block is acquired; and when the first candidate MV list includes two-way MVs, the MVs in the first candidate MV list are reorganized, to obtain a second candidate MV list of the current image block in the second merge mode.

The second merge mode in this embodiment may be a triangle merge mode, and the triangle merge mode is a merge mode when the current image block is divided into two triangular image blocks.

FIG. 4A is a schematic division of the image block corresponding to the triangle merge mode of the present disclosure, and FIG. 4B is another schematic division of the image block corresponding to the triangle merge mode of the present disclosure.

As shown in FIG. 4A and 4B, in the triangle merge mode, the current image block can be divided by the diagonal line from the upper left corner to the lower right comer of the current image block, or it can be divided by the diagonal line from the upper right corner to the lower left corner of the current image block, to obtain two prediction units (PU).

In S202, at the second merge mode, the first candidate MV list in the first merge mode is directly obtained, that is, the first candidate MV list in the first merge mode is multiplexed, to determine whether the first candidate MV list includes the two-day MVs.

When there is no two-way MV group in the first candidate MV list, and the number of MVs in the first candidate MV list is equal to the second preset threshold, it can be determined that the first candidate MV list is the second candidate MV list of the current image block.

When there is no two-way MV group in the first candidate MV list, and the number L of MVs in the first candidate MV list is less than the second preset threshold K, K-L preset filling vectors can be added to the first candidate MV list, to obtain the second candidate MV list of the current image block. Each preset filling vector may be a vector whose components are all zero.

When there is no two-way MV group in the first candidate MV list, and the number L of MVs in the first candidate MV list is larger than the second preset threshold K:
(1) the (K+1)-th to the Lth MVs in the first candidate MV list are deleted and the updated first candidate MV list is determined as the second candidate MV list of the current image block;
(2) the K MVs ranked in the first K positions in the first candidate MV list are extracted to obtain the second candidate MV list of the current image block, that is, the second candidate MV list of the current image block includes the K MVs ranked in the first K positions in the first candidate MV list.

When there are two-way MV groups in the first candidate MV list, the MVs in the first candidate MV list may be reorganized, to obtain the candidate MV list in which the included MVs are all single-way MVs. The reorganization method may be a reorganization method of the second merge mode in the VCC standard. Reorganizing the MVs in the first candidate MV list to obtain the second candidate MV list in which the included MVs are all single-way MVs may be implemented s as follows.

For each single-way MV in the first candidate MV list, the single-way MV may be added into the second candidate MV list according to the order of the single-way MVs in the first candidate MV list, the relationship between the number of MVs in the current second candidate MV list and the second preset threshold.
1. When the number of MVs in the current second candidate MV list is equal to the second preset threshold, adding MVs to the candidate MV list may be stopped.
2. When the number of MVs in the current second candidate MV list is less than the second preset threshold and there are other single-way MVs in the first candidate MV list after the current single-way MV, the first single-way MV after the current single-way MV in the first candidate MV list may be added to the candidate MV list.
3. When the number of MVs in the current second candidate MV list is less than the second preset threshold and there is no single-way MV after the current single-way MV, for each two-way MV group in the first candidate MV list, according to the order of the two-way MV group in the first candidate MV list, the forward MVs in the two-way MV group may be added to the candidate MV list, and the relationship between the current number of MVs in the second candidate MV list and the second preset threshold may be determined.

31. When the number of the MVs in the current second candidate MV list is equal to the second preset threshold, adding MVs to the candidate MV list may be stopped.
32. When the number of the MVs in the current second candidate MV list is less than the second preset threshold and there are other two-way MV groups after the current two-way MV group, the forward MV in the MV of the first two-way MV group after the current two-way MV group may be added to the current second candidate MV list.
33. When the number of the MVs in the current second candidate MV list is less than the second preset threshold and there is no two-way MV group after the current two-way MV group, for each two-way MV group in the first candidate MV list: according to the order of the two-way VM group in the first candidate MV list, the backward MV in the two-way MV group may be added to the candidate MV list, and the relationship between the number of MVs in the current second candidate MV list and the second preset threshold is determined.
331. When the number of MVs in the current second candidate MV list is equal to the second preset threshold, adding MVs to the candidate MV list may be stopped.
332. When the number of MVs in the current second candidate MV list is less than the second preset threshold and there are other two-way MV groups after the current two-way MV group, the backward MV in the first two-way MV group after the current two-way MV group may be added to the current second candidate MV list.
333. When the number of MVs in the current second candidate MV list is less than the second preset threshold and there is no two-way MV group after the current two-way MV group, for each two-way MV group in the first candidate MV list: according to the order of the two-way MV group in the first candidate MV list, the average value of the forward MV and the backward MV in the two-way MV group may be added to the candidate MV list, and the relationship between the number of MVs in the current second candidate and the second preset threshold may be determined.
3331. When the number of the MVs in the current second candidate MV list is equal to the second preset threshold, adding MVs to the candidate MV list may be stopped.
3332. When the number of MVs in the current second candidate MV list is less than the second preset threshold there are other two-way MV groups after the current two-way MV group, the average value of the forward MV and the backward MV in the MV of the first two-way MV group after the current two-way MV is added to the current second candidate MV list.
3333. When the number of MVs in the current second candidate MV list is less than the second preset threshold and there is no two-way MV group after the two-way MV group, at least one preset filling vector may be added to the candidate MV list to obtain the candidate MV list in which the sum of the number of MVs included and the number of the at least one preset filling vector is equal to the second preset threshold.

It is understandable that the finally obtained second candidate MV list may be the second candidate MV list obtained in 1, or the second candidate MV list obtained in 31, or the second candidate MV list obtained in 331, or the second candidate MV list obtained in 3331, or the candidate MV list or the second candidate MV list obtained in 3333.

Optionally, the second preset threshold may be any value from 4 to 12. For example, the second preset threshold may be 5, or 6, or 7, or 8, or 9, or 10, or 11.

In some embodiments, the first candidate MV list includes: MV₁, (MV₂, MV₃) and MV₄, the second preset threshold is 6, and the preset filling vector is 0. Correspondingly, (MV₂, MV₃) is the two-way MV group, MV₂ is the forward MV of the candidate block corresponding to (MV₂, MV₃), and MV₃ is the backward MV of the candidate block corresponding to (MV₂, MV₃). The MV information in the second candidate MV list obtained by reorganizing the MVs in the first candidate MV list includes: (MV₁, MV₄, MV₂, MV₃, (MV₂+ MV₃)/2, 0).

It is understandable that the specific implementation of "reorganizing the MVs in the first candidate MV list to obtain the second candidate MV list in which the included MVs are all single-way MVs" may include a process for transforming each MV in the first candidate MV list into a single-way MV. (1) For MVs that are single-way MVs, no processing is required. (2) For MVs in the two-way MV group, the forward MVs of the two-way MV groups may be extracted sequentially, and then the backward MVs of the two-way MV groups are extracted sequentially, and finally, the average value of the forward MV and the backward MV in each two-way MV group is sequentially obtained to obtain the corresponding single-way MV.

In this embodiment, when the inter-frame prediction mode is the second merge mode, the first candidate MV list in the first merge mode may be multiplexed, that is, there may be no need to reconstruct a first candidate MV list in the second merge mode. The complexity of the hardware of the video codec device may be reduced, such that the hardware of the video codec device may be easier to implement.

When the number of the MVs in the second candidate MV list of the current image block obtained in the embodiment shown in FIG. 2 is equal to the preset threshold, the second candidate MV list of the current image block obtained in the embodiment shown in FIG. 2 can be directly used to encode or decode the current image block. When the number of the MVs in the second candidate MV list of the current image block obtained in the embodiment shown in FIG. 2 is less than the preset threshold, to enrich the number of candidate MVs in the second candidate MV list and reduce the difference between the image block obtained by decoding the original image block after being encoded, the method in the previous embodiment is improved in the present embodiment.

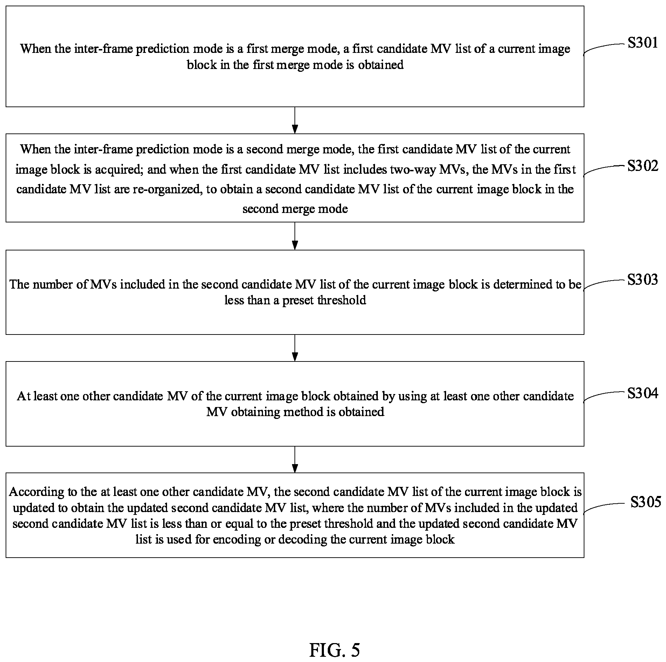

FIG. 5 shows another method for constructing the candidate MV list provided by the present embodiment. As shown in FIG. 5, the method includes S301 to S305.

In S301, when the inter-frame prediction mode is a first merge mode, a first candidate MV list of a current image block in the first merge mode is obtained.

Specifically, for the specific implementation of S301, reference can be made to S201 in the embodiment shown in FIG. 2.

In S302, when the inter-frame prediction mode is a second merge mode, the first candidate MV list of the current image block is acquired; and when the first candidate MV list includes two-way MVs, the MVs in the first candidate MV list are reorganized, to obtain a second candidate MV list of the current image block in the second merge mode.

Specifically, for the specific implementation of S302, reference can be made to S202 in the embodiment shown in FIG. 2.

The difference from the embodiment shown in FIG. 2 is that in this embodiment, because the candidate MVs obtained by other methods may be added to the second candidate MV list of the current image block obtained in this step and the obtained second candidate MV list of the current image block in this step is not the second candidate MV list finally used for image encoding and decoding, the second candidate MV list of the current image block obtained in this embodiment may not include preset filling vectors.

In S303, the number of MVs included in the second candidate MV list of the current image block is determined to be less than a preset threshold.

In S304, at least one other candidate MV of the current image block obtained by using at least one other candidate MV obtaining method is obtained.

Specifically, the at least one other candidate MV obtaining method is different from the candidate MV obtaining method in the embodiment shown in FIG. 2, that is, different from the method for obtaining candidate MVs in the first candidate MV list in the embodiment shown in FIG. 2.

Specifically, the at least one other candidate MV acquisition method may include at least one of a candidate MV acquisition method based on a history-based motion vector prediction (HMVP) technique, a candidate MV acquisition method based on motion vector merge with vector prediction difference (MMVD) technology, or a candidate MV acquisition method based on pairwise average technology.

Specifically, the candidate MV acquisition method based on the HMVP technology, the candidate MV acquisition method based on the MMVD technique, and the candidate MV acquisition method based on the paired average technique are all methods in the existing technologies, and will not be repeated in the present disclosure.

Obtaining the at least one other candidate MV of the current image block by using the at least one other candidate MV obtaining method may include but not be limited to the following cases.

In the first case, the at least one other candidate MV of the current image block may be obtained by a first candidate MV acquisition method.

Specifically, the at least one other candidate MV in this case may include at least one first candidate MV.

The first candidate MV acquisition method may be a candidate MV acquisition method based on the HMVP technology.

In the second case, at least one first candidate MV of the current image block may be obtained by using the first candidate MV acquisition method and at least one second candidate MV of the current image block obtained by using the second candidate MV acquisition method.

Specifically, the at least one other candidate MV in this case may include the at least one first candidate MV and the at least one second candidate MV.

The first candidate MV acquisition method may be a candidate MV acquisition method based on HMVP technology, and the second candidate MV acquisition method may be a candidate MV acquisition method based on MMVD technology.

In the third case, at least one first candidate MV of the current image block may be obtained by using a first candidate MV acquisition method, at least one second candidate MV of the current image block may be obtained by using the second candidate MV acquisition method, and at least one third candidate MV of the current image block may be obtained by using the third candidate MV acquisition method.

Specifically, the at least one other candidate MV in this case may include the at least one first candidate MV, the at least one second candidate MV, and the at least one third candidate MV.

The first candidate MV acquisition method may be a candidate MV acquisition method based on HMVP technology, the second candidate MV acquisition method may be a candidate MV acquisition method based on MMVD technology, and the third candidate MV acquisition method may be a candidate MV acquisition method based on the paring average method.

In S305, according to the at least one other candidate MV, the second candidate MV list of the current image block is updated to obtain the updated second candidate MV list, and the number of MVs included in the updated second candidate MV list is less than or equal to the preset threshold. The updated second candidate MV list is used for encoding or decoding the current image block.

Specifically, in the present embodiment, when the obtained at least one other candidate MV includes two-way MV groups, updating the second candidate MV list according to the at least one other candidate MV includes a1 and a2.

In a1, at least one single-way MV is determined according to the at least one other candidate MV.

Specifically, when at least one other candidate MV does not include a two-way MV group, "determining the at least one single-way MV based on the at least one other candidate MV" includes: determining that the at least one other candidate MV as the at least one single-way MV, that is, the at least one other candidate MV is the at least one single-way MV.

When the at least one other candidate MV includes two-way MV groups, for "determining the at least one single-way MV according to the at least one other candidate MV," reference can be made to the embodiment shown in FIG. 2 to process each MV in the first MV list to a single-way MV.

In a2, at least part of the at least one single-way MV determined according to the at least one other candidate MV is added to the second candidate MV list of the current image block, to obtain the updated second candidate MV list.

It is understandable that a1 can be executed first and then a2, or a1 and a2 can be executed alternately. If a1 and a2 are executed alternately, the method of "updating the second candidate MV list of the current image block according to the at least one other candidate MV to obtain the updated second candidate MV list" is the same as the process of adding at least one candidate MV of the current image in the first candidate MV list to the candidate MVs of the current image when reorganizing in the embodiment shown in FIG. 1.

As described in S302, when the number of the MVs in the second candidate MV list of the current image block is less than the preset threshold, the second candidate MV list of the current image block may or may not include the preset filling vector.

When the second candidate MV list of the current image block obtained in S302 includes M preset filling vectors, and the sum of the number of the MVs included in the second candidate MV list and M equals the preset threshold, adding the at least one single-way MV determined according to the at least one other candidate MV to the second candidate MV list of the current image block to obtain the updated second candidate MV list, may include: replacing N preset filling vectors in the second candidate MV list of the current image block with N single-way MVs in the at least one single-way MV of to obtain the updated second candidate MV list, where N≤M.

When the second candidate MV list of the current image block obtained in S302 does not include M preset filling vectors and the number of the MVs in the updated second candidate MV list is less than the preset threshold, adding the at least one single-way MV determined according to the at least one other candidate MV to the second candidate MV list of the current image block to obtain the updated second candidate MV list, may include b1 and b2.

In b1, it may be determined that the number of MVs in the second candidate MV list is less than the preset threshold after adding all the at least one single-way MV determined according to the at least one other candidate MV to the second candidate MV list of the current image block.

In b2, at least one preset filling vector may be added to the second candidate MV list of the current image block to obtain the updated second candidate MV list, where a sum of the number of included MVs and the number of preset filling vectors in the updated second candidate MV list equals the preset threshold.

Implementation of "updating the second candidate MV list of the current image block according to the at least one other candidate MV to obtain the updated second candidate MV list" will be described below.

"Updating the second candidate MV list of the current image block according to the at least one other candidate MV to obtain the updated second candidate MV list" may include but not be limited to the following cases.

In the first case, the at least one other candidate MV may include at least one first candidate MV.

In c1, at least one first single-way MV may be determined according to the at least one first candidate MV.

In c2, at least part of the at least one first single-way MV may be added to the second candidate MV list of the current image block, to obtain the updated second candidate MV list.

Specifically, c1 and c2 can be performed alternately. At this time, for implementation of c1 and c2, reference can be made to the process of adding at least one candidate MV of the current image in the first candidate MV list to the candidate MVs of the current image when reorganizing in the embodiment shown in FIG. 1.

When the second candidate MV list of the current image block in S302 does not include M preset filling vectors, and the number of the MVs in the second candidate MV list after the first update is less than the preset threshold after each first single-way MV of the at least one candidate MV is added to the second candidate MV list of the current image block, the at least one preset filling vector may be added to the second candidate MV list after the first update to obtain the updated second candidate MV list, where a sum of the number of included MVs and the number of preset filling vectors in the updated second candidate MV list equals the preset threshold.

When the second candidate MV list of the current image block in S302 includes M preset filling vectors, adding at least part of the at least one first single-way MV to the second candidate MV list of the current image block to obtain the updated second candidate MV list may include: replacing N preset filling vectors in the second candidate MV list of the current image block with N single-way MVs in the at least one first single-way MV, to obtain the updated second candidate MV list, where N≤M.

In the second case, the at least one other candidate MV may include at least one first candidate MV and at least one second candidate MV.

In d1, at least one first single-way MV may be determined according to the at least one first candidate MV.

In d2, each first single-way MV of the at least one first single-way MV may be added to the second candidate MV list of the current image block.

Specifically, in this case, each first single-way MV of the at least one first single-way MV may be added to the second candidate MV list of the current image block in S302, and after adding each first single-way MV of the at least one first single-way MV to the second candidate MV list of the current image block in S302, the number of the MVs in the obtained updated second candidate MV list may be less than the preset threshold.

When the second candidate MV list of the current image block in S302 includes M preset filling vectors and the at least one first single-way MV includes H first single-way MVs, adding each first single-way MV of the at least one first single-way MV to the second candidate MV list of the current image block to obtain the updated second candidate MV list may include: replacing H preset filling vectors in the second candidate MV list of the current image block with the H single-way MVs of the at least one first single-way MV, to obtain the updated second candidate MV list, where H<M.

In d3, it may be determined that the number of the MVs in the obtained updated second candidate MV list is less than the preset threshold after adding each first single-way MV of the at least one first single-way MV to the second candidate MV list of the current image block.

In d4, at least one second single-way MV may be determined according to the at least one second candidate MV.

In d5, at least part of the at least one second single-way MV may be added to the second candidate MV list of the current image block, to obtain the updated second candidate MV list.

Specifically, c1 and c2 can be performed alternately. At this time, for implementation of c1 and c2 reference can be made to the process of adding at least one candidate MV of the current image in the first candidate MV list to the candidate MVs of the current image when reorganizing in the embodiment shown in FIG. 2.

When the second candidate MV list of the current image block in S302 does not include M preset filling vectors, and the number of the MVs in the updated second candidate MV list is less than the preset threshold after each second single-way MV of the at least one candidate MV is added to the second candidate MV list of the current image block, the at least one preset filling vector may be added to the second candidate MV list after second update to obtain the updated second candidate MV list, where a sum of the number of included MVs and the number of preset filling vectors in the updated second candidate MV list equals the preset threshold.

When the second candidate MV list of the current image block in S302 includes M preset filling vectors, adding at least part of the at least one second single-way MV to the second candidate MV list of the current image block to obtain the updated second candidate MV list may include: replacing s preset filling vectors in the second candidate MV list of the current image block with s second single-way MVs of the at least one second single-way MV, to obtain the updated second candidate MV list, where s+H≤M and s+H=N.

In the third case, the at least one other candidate MV may include at least one first candidate MV, at least one second candidate MV, and at least one third candidate MV.

In e1, at least one first single-way MV may be determined according to the at least one first candidate MV.

In e2, each first single-way MV of the at least one first single-way MV may be added to the second candidate MV list of the current image block.

Specifically, in this case, each first single-way MV of the at least one first single-way MV may be added to the second candidate MV list of the current image block in S302, and after adding each first single-way MV of the at least one first single-way MV to the second candidate MV list of the current image block in S302, the number of the MVs in the obtained updated second candidate MV list may be less than the preset threshold.

When the second candidate MV list of the current image block in S302 includes M preset filling vectors and the at least one first single-way MV includes H first single-way MVs, adding each first single-way MV of the at least one first single-way MV to the second candidate MV list of the current image block to obtain the updated second candidate MV list may include: replacing H preset filling vectors in the second candidate MV list of the current image block with the H single-way MVs of the at least one first single-way MV, to obtain the updated second candidate MV list, where H<M.

In e3, it may be determined that the number of the MVs in the obtained updated second candidate MV list is less than the preset threshold after adding each first single-way MV of the at least one first single-way MV to the second candidate MV list of the current image block.

In e4, at least one second single-way MV may be determined according to the at least one second candidate MV.

In e5, at least part of the at least one second single-way MV may be added to the second candidate MV list of the current image block after the first update.

Specifically, in this case, each first single-way MV of the at least one second single-way MV may be added to the second candidate MV list of the current image block in S302, and after adding each first single-way MV of the at least one second single-way MV to the second candidate MV list of the current image block in S302, the number of the MVs in the obtained updated second candidate MV list may be less than the preset threshold.

When the second candidate MV list of the current image block in S302 includes M preset filling vectors and the at least one second single-way MV includes S second single-way MVs, adding each second single-way MV of the at least one second single-way MV to the second candidate MV list of the current image block to obtain the updated second candidate MV list may include: replacing S preset filling vectors in the second candidate MV list of the current image block with the S single-way MVs of the at least one second single-way MV, to obtain the updated second candidate MV list, where S<M.

In e6, it may be determined that the number of the MVs in the second candidate MV list after the second update is less than the preset threshold after adding each second single-way MV of the at least one second single-way MV to the second candidate MV list of the current image block.

In e7, at least one third single-way MV may be determined according to the at least one third candidate MV.

In e8, at least part of the at least one third single-way MV may be added to the second candidate MV list of the current image block after the second update, to obtain the updated second candidate MV list.

Specifically, e7 and e8 can be performed alternately. At this time, for implementation of e7 and e8 reference can be made to the process of adding at least one candidate MV of the current image in the first candidate MV list to the candidate MVs of the current image when reorganizing in the embodiment shown in FIG. 2.

When the second candidate MV list of the current image block in S302 does not include M preset filling vectors, and the number of the MVs in the updated second candidate MV list is less than the preset threshold after each third single-way MV of the at least one candidate MV is added to the second candidate MV list of the current image block, the at least one preset filling vector may be added to the second candidate MV list after second update to obtain the updated second candidate MV list, where a sum of the number of included MVs and the number of preset filling vectors in the updated second candidate MV list equals the preset threshold.

When the second candidate MV list of the current image block in S302 includes M preset filling vectors, adding at least part of the at least one third single-way MV to the second candidate MV list of the current image block to obtain the updated second candidate MV list may include: replacing t preset filling vectors in the second candidate MV list of the current image block with t third single-way MVs of the at least one third single-way MV, to obtain the updated second candidate MV list, where H+S+t=N and H+S+t≤M.

It is understandable that the finally obtained updated MV list may also include candidate MVs obtained by a fourth candidate MV obtaining method, candidate MVs obtained by a fifth candidate MV obtaining method, ..., candidate MVs obtained by a J-th candidate MV obtaining method, where the value of J is not limited in the present disclosure.

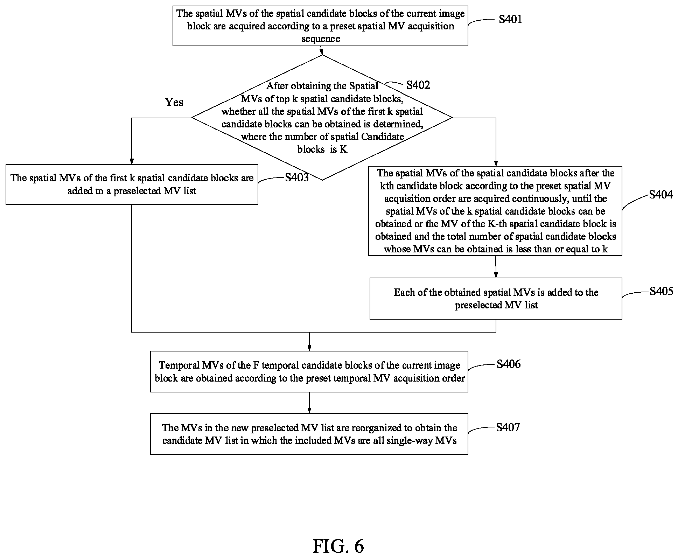

The candidate MV list construction method provided by the embodiment shown in FIG. 2 to FIG. 5 was described above. Another embodiment shown in FIG. 6 to FIG. 8 of the present disclosure provides another construction method of the candidate MV list which will be described below.

The candidate MV list construction method provided by the present embodiment shown in FIG. 6 to FIG. 8 can be applied to the triangle merge mode in the VCC standard.

The candidate MV list construction method provided by the present embodiment is shown in FIG. 6. In the present embodiment, when constructing the candidate MV list, a number of the obtained temporal candidate blocks is not limited. As shown in FIG. 6, the method includes S401 to S407.

In S401, the spatial MVs of the spatial candidate blocks of the current image block are acquired according to a preset spatial MV acquisition order.

Specifically, the preset spatial MV acquisition order is: a first image block adjacent to the first corner of the current image block and located on the first side of the current image block, and a second image block adjacent to the second corner of the current image block and located above the current image block, a third image block adjacent to the second corner of the current image block and located above the current image block, a fourth image block adjacent to the first corner of the current image block and located on the first side of the current image block, and a fifth image block adjacent to the third corner of the current image block and located on the first side of the current image block. The first corner and the second corner are opposite corners. That is, the order of acquiring the spatial MVs of each spatial candidate block is the first image block, the second image block, the third image block, the fourth image block, and the fifth image block in order.

In FIG. 3, the first image block is the image block labeled as 1 in FIG. 3, the second image block is the image block labeled as 2 in FIG. 3, and the third image block is the image block labeled as 3 in FIG. The fourth image block is the image block labeled as 4 in FIG. 3, and the fifth image block is the image block labeled as 5 in FIG. 3.

In S402, after obtaining the spatial MVs of first k spatial candidate blocks, it is determined whether all the spatial MVs of the first k spatial candidate blocks can be obtained, where the total number of spatial candidate blocks of the current image block is K and 1≤k≤K.

For example, k may be 4 and K may be 5.

When k is 4, after sequentially acquiring the MVs of the first image block, the second image block, the third image block, and the fourth image block, it is determined whether all MVs of the first image block, the second image block, the third image block, and the fourth image can be obtained.

When all the spatial MVs of the first k spatial candidate blocks can be obtained, S403 to S404 are executed.

In S403, the spatial MVs of the first k spatial candidate blocks are added to a preselected MV list.

Specifically, the order of the spatial MVs of the first k spatial candidate blocks in the preselected MV list is the same as the acquisition order of the spatial MVs of the k spatial candidate blocks.

When the first k spatial candidate blocks include candidate blocks whose spatial MVs cannot be obtained, S404 to S406 are executed.

In S404, the spatial MVs of the spatial candidate blocks after the kth candidate block according to the preset spatial MV acquisition order are acquired continuously, until the spatial MVs of the k spatial candidate blocks can be obtained or the MV of the K-th spatial candidate block is obtained and the total number of spatial candidate blocks whose MVs can be obtained is less than or equal to k.

Specifically, for example, when k=4, and the first image block, the second image block, the third image block, and the fourth image block may include image blocks whose MVs cannot be obtained, the spatial MV of the fifth image block may be obtained continuously.

In S405: each of the obtained spatial MVs is added to the preselected MV list.

Specifically, the order of the obtained spatial MVs in the preselected MV list is the same as the preset spatial MV acquisition order.

In S406: temporal MVs of the F temporal candidate blocks of the current image block are obtained according to the preset temporal MV acquisition order.

Specifically, the spatial MVs of the spatial candidate blocks are acquired first, and then the temporal MVs of the temporal candidate blocks are acquired.

The preset temporal MV acquisition order is: the sixth image block adjacent to the fourth corner of the current image block and located on the second side of the current image block, and the co-located image block of the current image block in the adjacent coded image. Among them, the fourth corner and the third corner are opposite corners. That is, the order of obtaining the temporal MVs of each temporal candidate block is the sixth image block, and the co-located image block of the current image block in the adjacent encoded image.

In one embodiment shown in FIG. 3, the sixth image block is the image block labeled as 6 in FIG. 3, and the co-located image block of the current image block in the adjacent coded image is the image block labeled as 7 in FIG. 3.

There are cases where the temporal MVs of at least one temporal candidate block cannot be obtained. That is to say, the temporal MVs of the temporal candidate blocks of the current image block cannot be obtained.

In S406, further, each obtained temporal MV is added to the preselected MV list, to obtain a new preselected MV list.

When the temporal MVs of the temporal candidate blocks of the current image block are not obtained, there is no temporal MV in the new preselected MV list, and the new preselected MV list is the preselected MV list obtained in S403 or S405.

In S407: the MVs in the new preselected MV list are reorganized to obtain the candidate MV list in which the included MVs are all single-way MVs.

This step refers to the process of reorganizing the at least one candidate MV of the current image in the first MV table in the embodiment shown in FIG. 2 to obtain the candidate MV of the current image, which will not be repeated in this embodiment.

In this embodiment, the number of spatial candidate blocks used to obtain candidate MVs is limited, which simplifies the order of constructing the candidate list of the current image block.

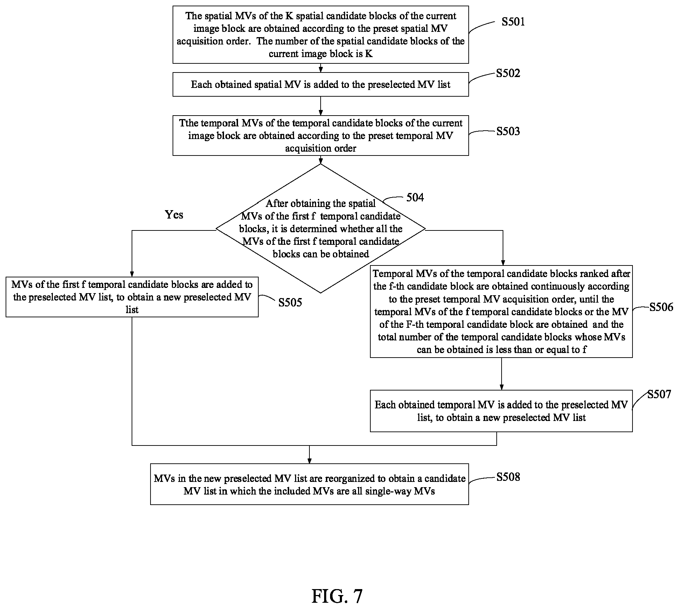

Another embodiment of the present disclosure provides another candidate MV list construction method, shown in FIG. 7. In the present embodiment, when constructing the candidate MV list, the number of temporal candidate blocks used to obtain candidate MVs is limited and the number of spatial candidate blocks used to obtain candidate MVs is not limited. As shown in FIG. 7, the method includes S501 to S508.

In S501, the spatial MVs of the K spatial candidate blocks of the current image block are obtained according to the preset spatial MV acquisition order. The number of the spatial candidate blocks of the current image block is K.

Specifically, for the preset spatial MV acquisition order, reference can be made to the previous embodiment.

In S502, each obtained spatial MV is added to the preselected MV list.

In S503, the temporal MVs of the temporal candidate blocks of the current image block are obtained according to the preset temporal MV acquisition order.

Specifically, for the preset temporal MV acquisition order, reference can be made to the previous embodiment.

In S504, after obtaining the spatial MVs of the first f temporal candidate blocks, it is determined whether all the MVs of the first f temporal candidate blocks can be obtained. The total number of the temporal candidate blocks of the current image block is F and 1≤f≤F.

Specifically, f may be 1 and F may be 2.

When f is 1, after obtaining the MV of the sixth image block, it is determined whether the MV of the sixth image block can be obtained.

When all the MVs of the first f temporal candidate blocks can be obtained, S505 is executed.

In S505, the MVs of the first f temporal candidate blocks are added to the preselected MV list, to obtain a new preselected MV list.

Specifically, the MVs of the first f temporal candidate blocks are added to the preselected MV list obtained in S502, to obtain the new preselected MV list.

When there are candidate blocks in the first f temporal candidate blocks whose MVs cannot be obtained, S506 and S507 are executed.

In S506, the temporal MVs of the temporal candidate blocks ranked after the f-the candidate block are obtained continuously according to the preset temporal MV acquisition order, until the temporal MVs of the f temporal candidate blocks or the MV of the F-th temporal candidate block are obtained and the total number of the temporal candidate blocks whose MVs can be obtained is less than or equal to f.

Specifically, for example, if the MV of the sixth image block is not obtained, the MV of the co-located image block of the current image block in the adjacent encoded image is obtained continuously.

In S507, each obtained temporal MV is added to the preselected MV list, to obtain a new preselected MV list.

Specifically, the MVs of the first f temporal candidate blocks are added to the preselected MV list obtained in S502, to obtain the new preselected MV list.

In S508, the MVs in the new preselected MV list are reorganized to obtain a candidate MV list in which the included MVs are all single-way MVs.

For this step, reference can be made to the process of reorganizing the at least one candidate MV of the current image block in the first MV list in the embodiment shown in FIG. 2 to obtain the candidate MV of the current image, which will not be repeated in this embodiment.

In this embodiment, the number of the temporal blocks used to obtain candidate MVs is limited, which simplifies the order of constructing the candidate list of the current image block.

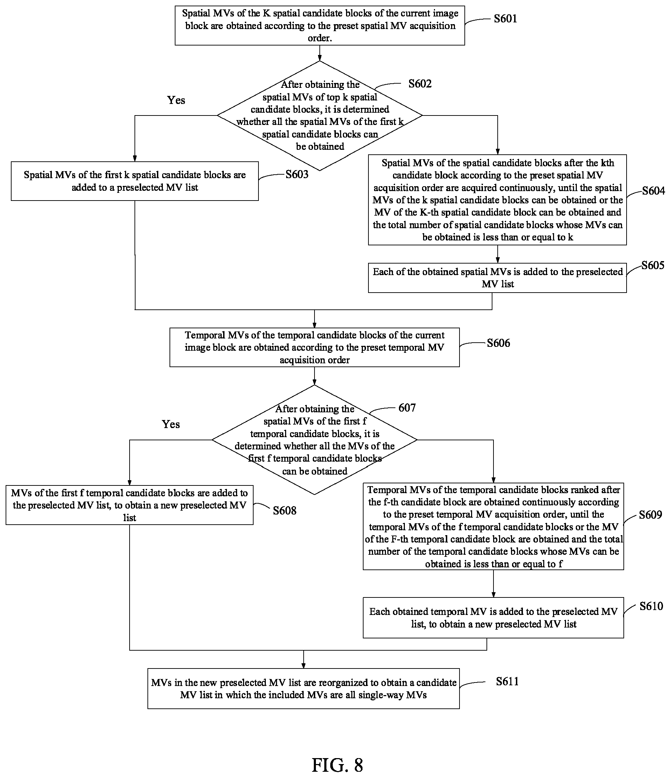

Another embodiment of the present disclosure provides another candidate MV list construction method, shown in FIG. 8. In the present embodiment, when constructing the candidate MV list, the number of temporal candidate blocks used to obtain candidate MVs is limited and the number of spatial candidate blocks used to obtain candidate MVs is also limited. As shown in FIG. 8, the method includes S601 to S611.

In S601, the spatial MVs of the K spatial candidate blocks of the current image block are obtained according to the preset spatial MV acquisition order. The number of the spatial candidate blocks of the current image block is K.

In S602, after obtaining the spatial MVs of first k spatial candidate blocks, it is determined whether all the spatial MVs of the first k spatial candidate blocks can be obtained, where the total number of spatial candidate blocks of the current image block is K and 1≤k≤K.

When all the spatial MVs of the first k spatial candidate blocks can be obtained, S603 is executed.

In S603, the spatial MVs of the first k spatial candidate blocks are added to a preselected MV list.

When the first k spatial candidate blocks include candidate blocks whose spatial MVs cannot be obtained, S604 to S605 are executed.

In S604, the spatial MVs of the spatial candidate blocks after the kth candidate block according to the preset spatial MV acquisition order are acquired continuously, until the spatial MVs of the k spatial candidate blocks can be obtained or the MV of the K-th spatial candidate block can be obtained and the total number of spatial candidate blocks whose MVs can be obtained is less than or equal to k.

In S605: each of the obtained spatial MVs is added to the preselected MV list.

In S606, the temporal MVs of the temporal candidate blocks of the current image block are obtained according to the preset temporal MV acquisition order.

In S607, after obtaining the spatial MVs of the first f temporal candidate blocks, it is determined whether all the MVs of the first f temporal candidate blocks can be obtained. The total number of the temporal candidate blocks of the current image block is F and 1≤f≤F.

When all the MVs of the first f temporal candidate blocks can be obtained, S608 and S609 are executed.

In S608, the MVs of the first f temporal candidate blocks are added to the preselected MV list, to obtain a new preselected MV list.

When there are candidate blocks in the first f temporal candidate blocks whose MVs cannot be obtained, S609 and S610 are executed.

In S609, the temporal MVs of the temporal candidate blocks ranked after the f-th candidate block are obtained continuously according to the preset temporal MV acquisition order, until the temporal MVs of the f temporal candidate blocks or the MV of the F-th temporal candidate block are obtained and the total number of the temporal candidate blocks whose MVs can be obtained is less than or equal to f.

In S610, each obtained temporal MV is added to the preselected MV list, to obtain a new preselected MV list.

Specifically, the MVs of the first f temporal candidate blocks are added to the preselected MV list obtained in S603 or S605, to obtain the new preselected MV list.

In S611, the MVs in the new preselected MV list are reorganized to obtain a candidate MV list in which the included MVs are all single-way MVs.

For the implementation of S601 to S611, reference can be made to the embodiments shown in FIG. 6 and FIG. 8, which is not repeated here.

In this embodiment, the number of the temporal blocks used to obtain candidate MVs and the number of the spatial blocks used to obtain candidate MVs are both limited, which simplifies the order of constructing the candidate list of the current image block.

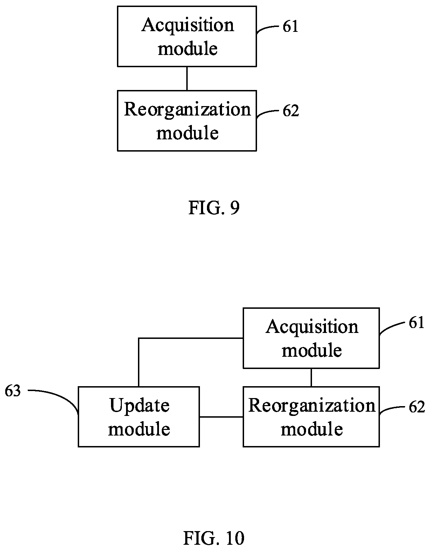

Another embodiment of the present disclosure provides a candidate MV list construction device. As shown in FIG. 9, the device includes an acquisition module 61 and a reorganization module 62.

The acquisition module 61 is configured to obtain a first candidate MV list of a current image block in the first merge mode when the inter-frame prediction mode is a first merge mode.

The reorganization module 62 is configured to obtain the first candidate MV list of the current image block when the inter-frame prediction mode is a second merge mode; and reorganize the MVs in the first candidate MV list to obtain a second candidate MV list of the current image block in the second merge mode when the first candidate MV list includes two-way MVs.

In one embodiment, the acquisition module 61 may be specifically configured to construct a first candidate MV list according to at least one candidate MV of the current image block. The at least one candidate MV may be obtained by a candidate MV acquisition method corresponding to the first merge mode.

The device in the present embodiment can be used to execute the method provided by various embodiments of the present disclosure. The implementation and the technical benefits are similar, which will not be repeated here.

Another embodiment of the present disclosure shown in FIG. 10 provides another candidate MV list construction device. As shown in FIG. 10, the device further includes an update module 63.

The acquisition module 61 is further configured to: obtain at least one other candidate MV of the current image block by using at least one other candidate MV obtaining method.

The update module 63 is configured to update the second candidate MV list according to the at least one other candidate MV, to obtain an updated second candidate MV list. The number of MVs included in the updated second candidate MV list is less than or equal to the preset threshold, and the updated second candidate MV list is used for encoding or decoding of the current image block.

In one embodiment, the second candidate MV list may include M preset filling vectors, and the sum of the number of the MVs included in the second candidate MV list and M may equal the preset threshold.

The update module 63 may be further configured to: determine at least one single-way MV according to the at least one other candidate MV; and replace N preset filling vectors in the second candidate MV list of the current image block with N single-way MVs in the at least one single-way MV to obtain the updated second candidate MV list, where N≤M.

In another embodiment, the second candidate MV list of the current image block does not include M preset filling vectors and the number of the MVs in the updated second candidate MV list is less than the preset threshold.

The update module 63 may be further configured to:
determine at least one single-way MV according to the at least one other candidate MV;
confirm that the number of MVs in the second candidate MV list is less than the preset threshold after adding all the at least one single-way MV determined according to the at least one other candidate MV to the second candidate MV list of the current image block; and
add at least one preset filling vector to the second candidate MV list of the current image block to obtain the updated second candidate MV list, where a sum of the number of included MVs and the number of preset filling vectors in the updated second candidate MV list equals the preset threshold.

In one embodiment, the acquisition module 61 may be specifically configured to obtain at least one first candidate MV of the current image block by using the first candidate MV acquisition method.

The update module 63 may be configured to update the second candidate MV list according to the at least one first candidate MV, to obtain an updated second candidate MV list.

In another embodiment, the acquisition module 61 may be specifically configured to obtain at least one first candidate MV of the current image block by using the first candidate MV acquisition method and obtain at least one second candidate MV of the current image block by using the second candidate MV acquisition method.

The update module 63 may be configured to:
update the second candidate MV list according to the at least one first candidate MV, to obtain a second candidate MV list after the first update;
confirm that the number of MVs in the second candidate MV list after the first update is less than the preset threshold; and
update the second candidate MV list after the first update according to the at least one second candidate MV, to obtain an updated second candidate MV list.

In another embodiment, the acquisition module 61 may be specifically configured to obtain at least one first candidate MV of the current image block by using the first candidate MV acquisition method, at least one second candidate MV of the current image block by using the second candidate MV acquisition method, and at least one third candidate MV of the current image block by using the third candidate MV acquisition method.

The update module 63 may be configured to:
update the second candidate MV list according to the at least one first candidate MV, to obtain a second candidate MV list after the first update;
confirm that the number of MVs in the second candidate MV list after the first update is less than the preset threshold; and
update the second candidate MV list after the first update according to the at least one second candidate MV, to obtain a second candidate MV list after the second update;
confirm that the number of MVs in the second candidate MV list after the second update is less than the preset threshold; and
update the second candidate MV list after the second update according to the at least one third candidate MV, to obtain an updated second candidate MV list.

In one embodiment, the at least one other candidate MV acquisition method may include at least one of a candidate MV acquisition method based on the HMVP technology, a candidate MV acquisition method based on the MMVD technique, or a candidate MV acquisition method based on the paired average technique.

In one embodiment, the first candidate MV acquisition method may be the candidate MV acquisition method based on the HMVP technology.

In one embodiment, the third candidate MV acquisition method may be the candidate MV acquisition method based on the paired average technique.

In one embodiment, the second candidate MV acquisition method may be the candidate MV acquisition method based on the MMVD technique.

In one embodiment, the preset threshold may be any one value from 4 to 12,

In one embodiment, each preset filling vector may be a vector whose included components are all 0.

In one embodiment, the acquisition module 61 may be configured to add the at least one candidate MV of the current image block to the first candidate MV list according to an adding order of the at least one candidate MV of the current image block dictated by the preset rule, to obtain the first candidate MV list.

In one embodiment, the reorganization module may be configured to:
for each single-way MV of the first candidate MV list, add the single-way MV to the candidate MV list according to the order of the single-way MV in the first candidate MV list, and determine that the number of the MVs in the candidate MV list is less than the preset threshold;
for each two-way MV group of the first candidate MV list, add the forward MV of the two-way MV group to the second candidate MV list, and determine that the number of the MVs in the second candidate MV list is less than the preset threshold;
after the forward MV in each two-way MV group is added to the second candidate MV list, when it is determined that the number of the MVs in the second candidate MV list is less than the preset threshold, for each two-way MV group of the first candidate MV list, add the backward MV of the two-way MV group to the second candidate MV list according to the order of the two-way MV group in the first candidate MV list and determine that the number of the MVs in the second candidate MV list is less than the preset threshold;
after the backward MV in each two-way MV group is added to the second candidate MV list, when it is determined that the number of the MVs in the second candidate MV list is less than the preset threshold, for each two-way MV group of the first candidate MV list, add an average value of the forward MV and the backward MV of the two-way MV group to the second candidate MV list according to the order of the two-way MV group in the first candidate MV list;
when the number of the MVs in the second candidate MV list is less than the preset threshold and the first candidate MV list includes two-way MV group after the current two-way group, add an average value of the forward MV and the backward MV of the first two-way MV group after the current two-way MV group in the first candidate MV list to the second candidate MV list; and
when the number of the MVs in the second candidate MV list equals the preset threshold, or when the number of the MVs in the second candidate MV list is less than the preset threshold and the first candidate MV list does not include other two-way MV group after the current two-way group, the obtained second candidate MV list after the average value of the forward MV and the backward MV of the two-way MV group to the second candidate MV list is determined as the second candidate MV list of the current image block.

The device in the present embodiment can be used to execute the method provided by various embodiments of the present disclosure. The implementation and the technical benefits are similar, which will not be repeated here.

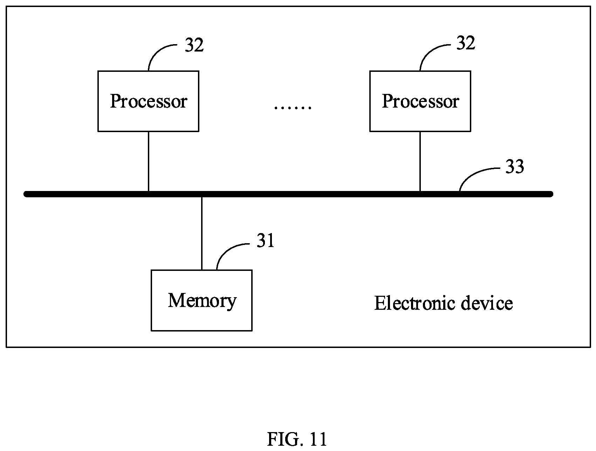

The present disclosure also provides an electronic device shown in FIG. 11. As shown in FIG. 11, the server includes a processor 32, a memory 31, and a communication bus 33. The communication bus 33 is configured to connect the processor 32 to the memory 31. The processor 32 is coupled with the memory 31.

The memory 31 is configured to store a computer program.

The processor 32 is configured to call the computer program in the memory 31, to implement the candidate MV list construction method provided by various embodiments of the present disclosure.

In one embodiment, the computer program may be stored in an external memory of the electronic device.

The present disclosure also provides a readable storage medium. The readable storage medium may include programs or instructions. When the programs or the instructions are executed in a computer, the candidate MV construction method provided by various embodiments of the present disclosure can be executed.

Those with skills in the arts should understand that all or parts of the steps of the method embodiments in the present disclosure may be implemented by hardware related to program instructions. The program may be stored in a storage medium, and may be configured to enable a computer device to perform all or part of the steps of the method described in each embodiment of the present disclosure. The aforementioned storage medium includes: a read-only memory (ROM), a random access memory (RAM), a magnetic disk, an optical disk, or another medium that can store program codes.

Finally, it should be noted that the above embodiments are only used to illustrate, but not to limit, the technical solutions of the disclosure. Although the disclosure is described in detail with reference to the foregoing embodiments, those of ordinary skill in the art should understand that it is still possible to modify the technical solutions described in the foregoing embodiments, or equivalently replace some or all of the technical features. These modifications or replacements do not cause the essence of the corresponding technical solutions to depart from the technical solutions of the embodiments of the present disclosure.

## Claims

1. A candidate MV list construction method, comprising:
obtaining a first candidate MV list of a current image block in a first merge mode when an inter-frame prediction mode is the first merge mode; and
when the inter-frame prediction mode is a second merge mode, obtaining the first candidate MV list of the current image block; and reorganizing MVs in the first candidate MV list to obtain a second candidate MV list of the current image block in the second merge mode when the first candidate MV list includes two-way MVs.

2. The method according to claim 1, wherein obtaining the first candidate MV list of the current image block in the first merge mode includes:
constructing the first candidate MV list according to at least one candidate MV of the current image block, wherein the at least one candidate MV is obtained by a candidate MV acquisition method corresponding to the first merge mode.

3. The method according to claim 2, a number of MVs in the second candidate MV list is less than a preset threshold, further comprising:
obtaining at least one other candidate MV of the current image block by using at least one other candidate MV obtaining method; and
updating the second candidate MV list according to the at least one other candidate MV, to obtain an updated second candidate MV list, wherein the number of MVs included in the updated second candidate MV list is less than or equal to the preset threshold, and the updated second candidate MV list is used for encoding or decoding of the current image block.

4. The method according to claim 3, wherein:
the second candidate MV list includes M preset filling vectors, and a sum of the number of the MVs included in the second candidate MV list and M equals the preset threshold; and
updating the second candidate MV list according to the at least one other candidate MV to obtain the updated second candidate MV list includes:
determining at least one single-way MV according to the at least one other candidate MV; and
replacing N preset filling vectors in the second candidate MV list of the current image block with N single-way MVs of the at least one single-way MV to obtain the updated second candidate MV list, wherein N≤M.

5. The method according to claim 3, wherein:
the second candidate MV list does not include M preset filling vectors, and a sum of the number of the MVs included in the second candidate MV list and M equals a preset threshold.

6. The method according to claim 5, wherein updating the second candidate MV list according to the at least one other candidate MV to obtain the updated second candidate MV list includes:
determining at least one single-way MV according to the at least one other candidate MV;
confirming that the number of MVs in the second candidate MV list after adding all the at least one single-way to the second candidate MV list of the current image block is less than the preset threshold; and
adding at least one preset filling vector to the second candidate MV list of the current image block to obtain the updated second candidate MV list, wherein a sum of the number of the MVs and a number of preset filling vectors in the updated second candidate MV list equals the preset threshold.

7. The method according to claims 3 to 6, wherein:
obtaining the at least one other candidate MV of the current image block by using the at least one other candidate MV acquisition method includes obtaining at least one first candidate MV of the current image block by using a first candidate MV acquisition method; and
updating the second candidate MV list according to the at least one other candidate MV, to obtain the updated second candidate MV list includes updating the second candidate MV list according to the at least one first candidate MV, to obtain the updated second candidate MV list.

8. The method according to any of claims 3 to 6, wherein:
obtaining the at least one other candidate MV of the current image block by using the at least one other candidate MV acquisition method includes: obtaining at least one first candidate MV of the current image block by using a first candidate MV acquisition method and at least one second candidate MV of the current image block by using a second candidate MV acquisition method; and
updating the second candidate MV list according to the at least one other candidate MV, to obtain the updated second candidate MV list includes:
updating the second candidate MV list according to the at least one first candidate MV, to obtain the second candidate MV list after the first update;
confirming that the number of MVs in the second candidate MV list after the first update is less than the preset threshold; and
updating the second candidate MV list after the first update according to the at least one second candidate MV, to obtain the updated second candidate MV list.

9. The method according to any of claims 3 to 6, wherein:
obtaining the at least one other candidate MV of the current image block by using the at least one other candidate MV acquisition method includes: obtaining at least one first candidate MV of the current image block by using a first candidate MV acquisition method, at least one second candidate MV of the current image block by using a second candidate MV acquisition method, and at least one third candidate MV of the current image block by using a third candidate MV acquisition method; and
updating the second candidate MV list according to the at least one other candidate MV, to obtain the updated second candidate MV list includes:
updating the second candidate MV list according to the at least one first candidate MV, to obtain the second candidate MV list after first update;
confirming that the number of MVs in the second candidate MV list after the first update is less than the preset threshold;
updating the second candidate MV list after the first update according to the at least one second candidate MV, to obtain the second candidate MV list after second update;
confirming that the number of MVs in the second candidate MV list after the second update is less than the preset threshold; and
updating the second candidate MV list after the second update according to the at least one third candidate MV, to obtain the updated second candidate MV list.

10. The method according to any of claims 3 to 6, wherein:
the at least one other candidate MV acquisition method includes at least one of a candidate MV acquisition method based on the HMVP technology, a candidate MV acquisition method based on the MMVD technique, or a candidate MV acquisition method based on the paired average technique.

11. The method according to claim 7, wherein the first candidate MV acquisition method is the candidate MV acquisition method based on the HMVP technology.

12. The method according to claim 8, wherein the second candidate MV acquisition method is the candidate MV acquisition method based on the MMVD technique.

13. The method according to claim 9, wherein the third candidate MV acquisition method is the candidate MV acquisition method based on the paired average technique.

14. The method according to any of claims 2 to 6, wherein:
the preset threshold is any value from 4 to 12.

15. The method according to any of claims 4 to 6, wherein each of the preset filling vectors is a vector whose components are all 0.

16. The method according to claim 2, wherein constructing the first candidate MV list according to the at least one candidate MV of the current image block includes:
adding the at least one candidate MV of the current image block to the first candidate MV list according to an adding order of the at least one candidate MV of the current image block.

17. The method according to claim 16, wherein reorganizing the MVs in the first candidate MV list to obtain the second candidate MV list of the current image block in the second merge mode includes:
for each single-way MV of the first candidate MV list, adding the single-way MV to the candidate MV list according to the order of the single-way MV in the first candidate MV list, and determining that the number of the MVs in the candidate MV list is less than the preset threshold;
for each two-way MV group of the first candidate MV list, adding the forward MV of the two-way MV group to the second candidate MV list, and determining that the number of the MVs in the second candidate MV list is less than the preset threshold;
when it is determined that the number of the MVs in the second candidate MV list is less than the preset threshold after the forward MV in each two-way MV group is added to the second candidate MV list, for each two-way MV group of the first candidate MV list, adding the backward MV of the two-way MV group to the second candidate MV list according to the order of the two-way MV group in the first candidate MV list and determining that the number of the MVs in the second candidate MV list is less than the preset threshold;
when it is determined that the number of the MVs in the second candidate MV list is less than the preset threshold after the backward MV in each two-way MV group is added to the second candidate MV list, for each two-way MV group of the first candidate MV list, adding an average value of the forward MV and the backward MV of the two-way MV group to the second candidate MV list according to the order of the two-way MV group in the first candidate MV list;
when the number of the MVs in the second candidate MV list is less than the preset threshold and the first candidate MV list includes two-way MV groups after the current two-way group, adding an average value of the forward MV and the backward MV of the first two-way MV group after the current two-way MV group in the first candidate MV list to the second candidate MV list;
when the number of the MVs in the second candidate MV list equals the preset threshold, or when the number of the MVs in the second candidate MV list is less than the preset threshold and the first candidate MV list does not include other two-way MV group after the current two-way group, determining the obtained second candidate MV list after the average value of the forward MV and the backward MV of the two-way MV group is added to the second candidate MV list as the second candidate MV list of the current image block.

18. A candidate MV list construction device, comprising:
an acquisition module, configured to obtain a first candidate MV list of a current image block in a first merge mode when the inter-frame prediction mode is the first merge mode; and
a reorganization module, configured to obtain the first candidate MV list of the current image block when the inter-frame prediction mode is a second merge mode; and reorganize the MVs in the first candidate MV list to obtain a second candidate MV list of the current image block in the second merge mode when the first candidate MV list includes two-way.

19. The device according to claim 18, wherein the acquisition module is specifically configured to construct the first candidate MV list according to at least one candidate MV of the current image block wherein the at least one candidate MV may be obtained by a candidate MV acquisition method corresponding to the first merge mode.

20. The device according to claim 19, wherein:
the acquisition module is further configured to obtain at least one other candidate MV of the current image block by using at least one other candidate MV obtaining method; and
the device further comprises an update module, configured to update the second candidate MV list according to the at least one other candidate MV, to obtain an updated second candidate MV list, wherein the number of MVs included in the updated second candidate MV list is less than or equal to the preset threshold, and the updated second candidate MV list is used for encoding or decoding of the current image block.

21. The device according to claim 20, wherein:
the second candidate MV list includes M preset filling vectors, and a sum of the number of the MVs included in the second candidate MV list and M equals a preset threshold; and
the update module is specifically configured to:
determine at least one single-way MV according to the at least one other candidate MV; and
replace N preset filling vectors in the second candidate MV list of the current image block with N single-way MVs of the at least one single-way MV to obtain the updated second candidate MV list, where N≤M.

22. The device according to claim 20, wherein:
the second candidate MV list does not include M preset filling vectors, and a sum of the number of the MVs included in the second candidate MV list and M equals a preset threshold.

23. The device according to claim 22, wherein the update module is specifically configured to:
determine at least one single-way MV according to the at least one other candidate MV;
confirm that the number of MVs in the second candidate MV list is less than the preset threshold after adding all the at least one single-way to the second candidate MV list of the current image block; and
add at least one preset filling vector to the second candidate MV list of the current image block to obtain the updated second candidate MV list, where a sum of the number of included MVs and a sum of the preset filling vectors in the updated second candidate MV list equals the preset threshold.

24. The device according to any of claims 20 to 23, wherein:
the acquisition module is specifically configured to obtain at least one first candidate MV of the current image block by using the first candidate MV acquisition method; and
the update module is specifically configured to update the second candidate MV list according to the at least one first candidate MV, to obtain the updated second candidate MV list.

25. The device according to any of claims 20 to 23, wherein:
the acquisition module is specifically configured to obtain at least one first candidate MV of the current image block by using the first candidate MV acquisition method and at least one second candidate MV of the current image block by using the second candidate MV acquisition method; and
the update module is specifically configured to:
update the second candidate MV list according to the at least one first candidate MV, to obtain the second candidate MV list after the first update;
confirm that the number of MVs in the second candidate MV list after the first update is less than the preset threshold; and
update the second candidate MV list after the first update according to the at least one second candidate MV, to obtain the updated second candidate MV list.

26. The device according to any of claims 20 to 23, wherein:
the acquisition module is specifically configured to obtain at least one first candidate MV of the current image block by using the first candidate MV acquisition method, at least one second candidate MV of the current image block by using the second candidate MV acquisition method, and at least one third candidate MV of the current image block by using the third candidate MV acquisition method; and
the update module is specifically configured to:
update the second candidate MV list according to the at least one first candidate MV, to obtain the second candidate MV list after the first update;
confirm that the number of MVs in the second candidate MV list after the first update is less than the preset threshold;
update the second candidate MV list after the first update according to the at least one second candidate MV, to obtain the second candidate MV list after the second update;
confirm that the number of MVs in the second candidate MV list after the second update is less than the preset threshold; and
update the second candidate MV list after the second update according to the at least one third candidate MV, to obtain the updated second candidate MV list.

27. The device according to any of claims 20 to 23, wherein:
the at least one other candidate MV acquisition method includes at least one of a candidate MV acquisition method based on the HMVP technology, a candidate MV acquisition method based on the MMVD technique, or a candidate MV acquisition method based on the paired average technique.

28. The device according to claim 24, wherein the first candidate MV acquisition method is the candidate MV acquisition method based on the HMVP technology.

29. The device according to claim 25, wherein the second candidate MV acquisition method is the candidate MV acquisition method based on the MMVD technique.

30. The device according to claim 26, wherein the third candidate MV acquisition method is the candidate MV acquisition method based on the paired average technique.

31. The device according to any of claims 18 to 23, wherein:
the preset threshold is any value from 4 to 12.

32. The device according to any of claims 21 to 23, wherein each of the preset filling vectors is a vector whose components are all 0.

33. The device according to claim 19, wherein the acquisition module is specifically configured to:
add the at least one candidate MV of the current image block to the first candidate MV list according to an adding order of the at least one candidate MV of the current image block dictated by the preset rule.

34. The device according to claim 18, wherein the reorganization module is configured to:
for each single-way MV of the first candidate MV list, add the single-way MV to the candidate MV list according to the order of the single-way MV in the first candidate MV list, and determine that the number of the MVs in the candidate MV list is less than the preset threshold;
for each two-way MV group of the first candidate MV list, add the forward MV of the two-way MV group to the second candidate MV list, and determine that the number of the MVs in the second candidate MV list is less than the preset threshold;
after the forward MV in each two-way MV group is added to the second candidate MV list, and it is determined that the number of the MVs in the second candidate MV list is less than the preset threshold, for each two-way MV group of the first candidate MV list, add the backward MV of the two-way MV group to the second candidate MV list according to the order of the two-way MV group in the first candidate MV list and determine that the number of the MVs in the second candidate MV list is less than the preset threshold;
after the backward MV in each two-way MV group is added to the second candidate MV list and it is determined that the number of the MVs in the second candidate MV list is less than the preset threshold, for each two-way MV group of the first candidate MV list, add an average value of the forward MV and the backward MV of the two-way MV group to the second candidate MV list according to the order of the two-way MV group in the first candidate MV list;
when the number of the MVs in the second candidate MV list is less than the preset threshold and the first candidate MV list includes two-way MV groups after the current two-way group, add an average value of the forward MV and the backward MV of the first two-way MV group after the current two-way MV group in the first candidate MV list to the second candidate MV list;
when the number of the MVs in the second candidate MV list equals the preset threshold, or when the number of the MVs in the second candidate MV list is less than the preset threshold and the first candidate MV list does not include other two-way MV group after the current two-way group, determine the obtained second candidate MV list after the average value of the forward MV and the backward MV of the two-way MV group is added to the second candidate MV list as the second candidate MV list of the current image block.

35. A readable storage medium, storing programs or instructions, wherein when the programs or instructions are executed on a computer, the candidate MV list construction method according to any of claims 1 to 17 is executed.

36. An electronic device, comprising a processor and a memory, wherein:
the processor is coupled with the memory;
the memory is configured to store a computer program; and
the processor is configured to call the computer program in the memory, to implement the candidate MV list construction method according to any of claims 1 to 17.
